# EUROPÄISCHE PATENTANMELDUNG

(11) **EP 2 050 803 A2**
(43) Veröffentlichungstag der Anmeldung: **22.04.2009**
(21) Anmeldenummer: 08166018.5
(22) Anmeldetag: 07.10.2008
(51) Int. Cl.: C09J 7/04

(54) **Klebeband**

(30) Priorität: 19.10.2007 DE 102007050534; 16.01.2008 DE 102008004713
(71) Anmelder: tesa AG, 20253 Hamburg (DE)
(72) Erfinder: Kopf, Patrik Dr., 22417 Hamburg (DE); Pfaff, Ronald Dr., 22335 Hamburg (DE); Wahlers-Schmidlin, Andreas, 21720 Guderhandviertel (DE); Biasoli, Ernesto, 21026 Garirate (IT)

(57) **Zusammenfassung**

Klebeband, vorzugsweise zum Umhüllen von langgestrecktem Gut wie insbesondere Leitungen oder Kabelsätze, mit einem bandförmigen Träger, der aus einem Schusseintragsgewirke besteht, und mit einer zumindest auf einer Seite des Trägers aufgebrachten vorzugsweise druckempfindlichen Klebebeschichtung, wobei in dem Schusseintragsgewirke das Schussgarn aus einem texturierten Filamentgarn besteht.

## Beschreibung

Die Erfindung betrifft ein Klebeband, vorzugsweise zum Umhüllen von langgestrecktem Gut wie insbesondere Leitungen oder Kabelsätze mit einem textilen Träger und mit einer zumindest auf einer Seite des Trägers aufgebrachten druckempfindlichen Klebebeschichtung. Des Weiteren betrifft die Erfindung die Verwendung des Klebebands sowie einen Kabelbaum, der mit dem erfindungsgemäßen Klebeband ummantelt ist.

In vielen Industriebereichen werden Bündel aus einer Vielzahl von elektrischen Leitungen vor dem Einbau oder in bereits montiertem Zustand umwickelt, um den Raumbedarf des Leitungsbündels durch Bandagieren zu reduzieren sowie zusätzlich Schutzfunktionen zu erzielen. Mit Folienklebebändern wird ein gewisser Schutz vor Flüssigkeitszutritt erreicht, mit luftigen und voluminösen Klebebändern auf Basis von dicken Vliesstoffen oder Schaumstoffen als Träger erhält man dämpfende Eigenschaften, bei Verwendung von abriebfesten, stabilen Trägermaterialien wird eine Schutzfunktion gegen Scheuern und Reiben erzielt.

Die Verwendung von Klebebändern mit einem Vlies als Träger zur Bandagierung von Kabelbäumen ist bekannt. So beschreibt die DE 94 01 037 U ein Klebeband mit einem bandförmigen, textilen Träger, der aus einem Nähvlies besteht, das seinerseits aus einer aus einer Vielzahl parallel zueinander laufender, eingenähter Nähte gebildet wird. Das beschriebene Klebeband zeigt bei seiner Verwendung zur Kabelbaumbandagierung aufgrund seiner speziellen Ausführung Geräuschdämmungseigenschaften.

Neben dem in der genannten Schrift erwähnten Nähvlies gibt es weitere Träger, die in Klebebändern zur Kabelbaumbandagierung eingesetzt werden.

Die DE 44 42 092 C1 beschreibt solch ein Klebeband auf Nähvliesbasis, das auf der Trägerrückseite beschichtet ist. Der DE 44 42 093 C1 liegt die Verwendung eines Vlieses als Träger für ein Klebeband zugrunde, das durch die Bildung von Maschen aus den Fasern des Vlieses verstärktes Querfaservlies entsteht, also ein dem Fachmann unter dem Namen Malivlies bekanntes Vlies. Die DE 44 42 507 C1 offenbart ein Klebeband zur Kabelbandagierung, jedoch basiert es auf so genannten Kunit- beziehungsweise Multiknitvliesen.

Aus der DE 195 23 494 C1 ist die Verwendung eines Klebebandes mit einem Träger aus Vliesmaterial zum Bandagieren von Kabelbäumen bekannt, das einseitig mit einem Kleber beschichtet ist. Bei dem erfindungsgemäß zum Einsatz kommenden Vlies handelt es sich um ein Spinnvlies aus Polypropylen, das mit Hilfe eines Kalanders thermisch verfestigt und geprägt ist, wobei die Prägewalze eine Prägefläche von 10 % bis 30 %, bevorzugt 19 %, aufweist.

Mit der DE 298 04 431 U1 wird ebenfalls die Verwendung eines Klebebandes mit einem Träger aus Vliesmaterial zum Bandagieren von Kabelbäumen offenbart, wobei das vorgeschlagene Spinnvlies aus Polyester besteht.

Aus der DE 298 19 014 U1 sind Klebebänder auf Basis eines mit Luft- und/oder Wasserstrahlen verfestigten Vliesen bekannt.

In WO 99/24518 A1 wird ein Klebeband beschrieben, wobei das Trägermaterial ein Vlies ist, das erst durch die spezifische Auswahl von Fasern oder Filamenten mit einer Feinheit von größer 15 denier sowie durch eine zusätzlich aufextrudierte Folienschicht eine Eignung für die Verwendung von Klebebändern findet.

In EP 1 000 992 A1 wird ein gelochtes Baumwolle-Vlies mit einer 10 bis 45 µm dicken Polyethylenbeschichtung sowie einer zusätzlichen Releasebeschichtung beschrieben.

Die Texturierung von Fadenmaterial wird vorrangig für textile Flächengebilde aus Chemiefasern wie Polyester oder Polyamid eingesetzt, um den Kunstfasern einen naturfaserähnlichen Charakter zu geben. Chemiefasern unterscheiden sich bei der Verspinnung zu Garnen von Naturfasern in der Länge der zu verspinnenden Filamente. Die Filamentlänge ist bei Naturfasern wesentlich kürzer als die von Chemiefasern und beträgt nur wenige Zentimeter. Bei der Verspinnung von kurzen Filamentlängen zu Garnen und Fäden wie beispielsweise bei Baumwolle erhält dieser durch die herausstehenden Filamentenden eine Bauschigkeit und damit ein angenehmes Anfassvermögen. Unterschiedlich dazu werden bei Chemiefasern Endlosfilamente eingesetzt, die nach der Verspinnung zum Garn eine parallele Lage zueinander besitzen und dem Garn ein glattes, unnatürliches Anfassvermögen geben.

Die Texturierung von Fadenmaterial aus künstlichen Endlosfilamenten kann beispielsweise durch die Deformation der Filamente aus ihrer Parallellage durch Torsion oder Biegung mit anschließender Thermofixierung vorgenommen. Ein Beispiel dafür ist das so genannte Falschdrahtverfahren [Grundlagen der Textilveredelung", 13. Überarbeitete Auflage, Deutsch Fachbuchverlag 1989].

Häufig werden textile Flächengebilde aus Chemiefasern wie Polyester mit texturiertem Fadenmaterial aufgrund ihrer angenehmen Haptik für Bekleidungszwecke beispielsweise als Frontfixierung im hochwertigen Oberbekleidungsbereich verwendet.

Die physikalische Messung der Geräuschdämpfungswirkung kann gemäß der Methode erfolgen, wie sie in DE 100 39 982 A1 detailliert beschrieben wird. Es handelt sich hierbei um eine in der Automobilindustrie etablierte Messmethodik, wie sie beispielsweise auch in der BMW-Norm GS 95008-3 (Ausgabe Mai 2000) angegeben wird.

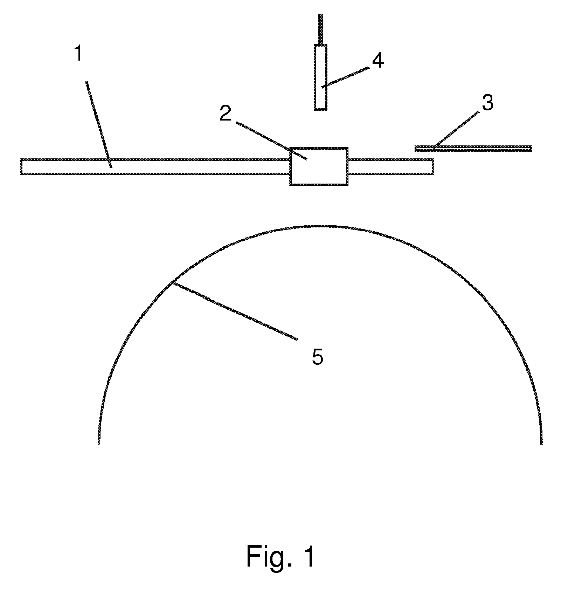

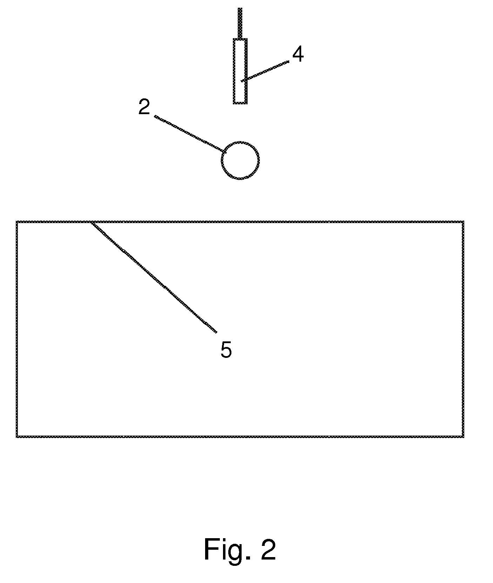

Im Folgenden wird in Verbindung mit den Figuren 1 und 2 das Messverfahren nach der BMW-Norm GS 95008-3 aus Mai 2000 ausführlich dargelegt.

### Es zeigen

- Figur 1: den Aufbau der Messvorrichtung in der seitlichen Ansicht und
- Figur 2: denselben Aufbau in der horizontalen Ansicht.

Bei dieser Meßmethode wird ein definierter Stahlstab 1 mit 8 mm Durchmesser derartig mit dem Prüfling 2 - sprich Klebeband - umwickelt, dass sich zwischen dem Drehpunkt des Stabes und dem Prüfling eine Strecke von 210 mm ergibt. Der umwickelte Stahlstab 1 wird bis zur Arretierung 3 auf die Fallhöhe (20 mm) und mit einem Gewicht von ca. 16 g auf ein Aluminiumblech 5 fallen gelassen. Das Aluminiumblech 5, das im unverformten Zustand 350 x 190 x 0,3 [mm] misst, wird halbtonnenförmig unter dem Prüfling 2 angeordnet, so dass sich eine Weite von 290 mm ergibt.
Das Gesamtschallergebnis wird mittels eines 50 mm über der Aufschlagstelle befindlichen Mikrofons 4 in einem Frequenzbereich von beispielsweise 20 bis 12.500 Hz mit einem handelsüblichen Schallmessgerät, beispielsweise Typ 2226 der Firma Bruel & Kjaer erfasst und aufgezeichnet. Für das menschliche Ohr als besonders relevant sind Frequenzen im Bereich von 2.000 bis 5.000 Hz.
Die Dämpfung wird als Differenz zwischen Nullwert mit nicht-umwickeltem Stahlstab sowie dem jeweiligen Messwert in dB(A) angegeben.

Alternativ wird das Geräuschdämpfungsverhalten nach der Methode gemessen, wie sie in der LV312 "Klebebänder für Kabelsätze in Kraftfahrzeugen" (1/2005) dargelegt ist.
Die LV312 "Klebebänder für Kabelsätze in Kraftfahrzeugen" (1/2005) ist eine Norm, die als gemeinsame Prüfrichtlinie bei den Firmen Audi, BMW, Daimler und VW zur Anwendung kommt. Als anwendungstechnisch wichtige Prüfungen von Klebebändern, die zur Bewicklung von Kabelsätzen eingesetzt werden, sind in dieser Richtlinie beispielsweise Prüfmethoden für die Kompatibilität von Klebebändern mit elektrischen Fahrzeugleitungen sowie für die Chemikalienbeständigkeit, das Geräuschdämpfungsverhalten, das Fogging-Verhalten und die Abriebbeständigkeit beschrieben.

Aufgabe der Erfindung ist es, ein Klebeband zur Verfügung zu stellen, das bei der Ummantelung von beispielsweise Kabeln die geforderte Eigenschaften der Dämpfung erfüllt, das ein ummanteltes Produkt, also in diesem Fall Kabelbaum, gewährleistet, der flexibler ist als die bisherigen Produkte, die mit den bekannten Klebebändern ummantelt worden sind.

Gelöst wird diese Aufgabe durch ein Klebeband, wie es im Hauptanspruch näher gekennzeichnet ist. In den Unteransprüchen sind vorteilhafte Ausführungsformen der Erfindung beschrieben. Des Weiteren sind die Verwendung des erfindungsgemäßen Klebebands sowie ein mit dem Klebeband ummantelter Kabelbaum vom Erfindungsgedanken umfasst.

Demgemäß betrifft die Erfindung ein Klebeband, vorzugsweise zum Umhüllen von langgestrecktem Gut wie insbesondere Leitungen oder Kabelsätze, mit einem bandförmigen Träger, der aus einem Schusseintragsgewirke besteht, und mit einer zumindest auf einer Seite des Trägers aufgebrachten vorzugsweise druckempfindlichen Klebebeschichtung. In dem Schusseintragsgewirke besteht das Schussgarn aus einem texturierten Filamentgarn.

Ein Filamentgarn ist ein Endlosgarn, das aus einer Vielzahl von dünnen Fäden besteht, das unterbrechungslos als Endlosgarn von mehreren Kilometern Länge gesponnen wird und das über diese gesamte Länge hinweg über eine regelmäßige Lineardichte verfügt. Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Stanzlinge, Etiketten und dergleichen.

Gemäß einer ersten bevorzugten Ausführungsform der Erfindung weist das Schusseintragsgewirke ein Flächengewicht zwischen 30 und 200 g/m², vorzugsweise zwischen 60 und 100 g/m², besonders vorzugsweise zwischen 80 und 90 g/m² auf.

Vorzugsweise kann der Träger Zugkräfte in Querrichtung von über 130 N/cm, vorzugsweise über 160 N/cm aufnehmen.

Weiterhin vorzugsweise weist das Schusseintragsgewirke eine Reißkraft in Laufrichtung von 10 daN/(5 cm) bis 20 daN/(5 cm), insbesondere 13 bis 17 daN/(5 cm) sowie eine Reißdehnung in Laufrichtung von 30 bis 50 %, insbesondere 40 % auf.

Weiter vorzugsweise ist auf dem Schusseintragsgewirke keine weitere Schicht in Form einer Folie oder eines anderen textilen Trägers vorgesehen.

Das Schusseintragsgewirke weist parallele Maschenreihen auf, und zwar bevorzugt 5 bis 12 pro Zentimeter, besonders bevorzugt 10, ganz besonders bevorzugt 7,5.

Die Kettfäden bestehen vorzugsweise aus Polyester oder Polyamid und weisen eine längenbezogene Masse von 30 bis 60 dtex, besonders vorzugsweise zwischen 45 und 55 dtex sind auf.

In Querrichtung erfolgt gemäß einer weiteren bevorzugten Ausführungsform der Erfindung ein Vollschusseintrag mit einem texturierten Garn der bevorzugten Stärke 600 bis 800 dtex, vorzugsweise 650 bis 700 dtex.
Pro Lauflänge in Querrichtung sind zwischen 7 bis 20, vorzugsweise 8 bis 12, weiter vorzugsweise 10 Fäden bevorzugt.

Weiter vorzugsweise besteht das gesamte Schusseintragsgewirke aus Polyester oder Polyamid.

Um aus dem Träger ein Selbstklebeband herzustellen, kann auf alle bekannten Klebemassensysteme zurückgegriffen werden. Neben Natur- oder Synthesekautschuk basierten Klebemassen sind insbesondere Silikonklebemassen sowie Polyacrylatklebemassen verwendbar. Wegen ihrer besonderen Eignung als Klebemasse für Wickelbänder von automobilen Kabelsätzen in Hinblick auf die Foggingfreiheit sowie die hervorragende Verträglichkeit mit PVC- sowie PVC-freien Aderisolierungen sind lösungsmittelfreie Acrylat-Hotmeltmassen zu bevorzugen, wie sie in DE 198 07 752 A1 sowie in DE 100 11 788 A1 näher beschrieben sind.
Das Auftragsgewicht bewegt sich im Bereich zwischen 20 bis 100 g/m².
Als Beschichtungstechnologie kommen bekannte Systeme zum Zuge, wobei sich Verfahren anbieten, die ein druckloses Auflegen von hochviskosen Klebemassen zulassen, beispielsweise die Beschichtung von Hotmelt-Klebemassen über Düsenbeschichtung oder über Transferierung von einem anti-adhäsiven Trägertuch oder Releaseliner auf den Trägerverbund.

Als Klebemasse ist eine solche auf Acrylathotmelt-Basis geeignet, die einen K-Wert von mindestens 20 aufweist, insbesondere größer 30 (gemessen jeweils in 1 Gew.-%iger Lösung in Toluol, 25 °C), erhältlich durch Aufkonzentrieren einer Lösung einer solchen Masse zu einem als Hotmelt verarbeitbaren System.
Das Aufkonzentrieren kann in entsprechend ausgerüsteten Kesseln oder Extrudern stattfinden, insbesondere beim damit einhergehenden Entgasen ist ein Entgasungs-Extruder bevorzugt.
Eine derartige Klebemasse ist in der DE 43 13 008 C2 dargelegt. Diesen auf diesem Wege hergestellten Acrylatmassen wird in einem Zwischenschritt das Lösungsmittel vollständig entzogen.
Der K-Wert wird dabei insbesondere bestimmt in Analogie zu DIN 53 726.

Zusätzlich werden dabei weitere leichtflüchtige Bestanteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden.
Die Lösung der Masse kann 5 bis 80 Gew.-%, insbesondere 30 bis 70 Gew.-% Lösungsmittel enthalten.
Vorzugsweise werden handelsübliche Lösungsmittel eingesetzt, insbesondere niedrig siedende Kohlenwasserstoffe, Ketone, Alkohole und/oder Ester.
Weiter vorzugsweise werden Einschnecken-, Zweischnecken- oder Mehrschneckenextruder mit einer oder insbesondere zwei oder mehreren Entgasungseinheiten eingesetzt.
In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A beschrieben. Die Klebemasse auf Acrylathotmelt-Basis kann UV-vernetzt werden. Andere Vernetzungsarten sind aber auch möglich, zum Beispiel die Elektronenstrahlenvernetzung.
In einer weiteren bevorzugten Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.
Der Restlösungsmittel-Gehalt sollte unter 1 Gew.-% betragen.

Eine Klebemasse, die sich als besonders geeignet zeigt, ist eine niedermolekulare Acrylatschmelzhaftklebemasse, wie sie unter der Bezeichnung acResin UV oder Acronal®, insbesondere Acronal DS 3458, von der BASF geführt wird. Diese Klebemasse mit niedrigem K-Wert erhält ihre anwendungsgerechten Eigenschaften durch eine abschließende strahlenchemisch ausgelöste Vernetzung.

Vorzugsweise besteht also die Klebebeschichtung aus einer acrylat- oder silikonhaltigen Klebemasse.

Die Klebemasse kann in Längsrichtung des Klebebands in Form eines Streifens aufgebracht sein, der eine geringere Breite aufweist als der Träger des Klebebands.
Der beschichtete Streifen hat in einer vorteilhaften Ausführungsform eine Breite von 10 bis 80% der Breite des Trägermaterials. Besonders vorzugsweise erfolgt der Einsatz von Streifen mit einer Beschichtung von 20 bis 50% der Breite des Trägermaterials.
Je nach Verwendungsfall können auch mehrere parallele Streifen des Klebers auf dem Trägermaterial beschichtet sein.
Die Lage des Streifens auf dem Träger ist frei wählbar, wobei eine Anordnung direkt an einer der Kanten des Trägers bevorzugt wird.

Schließlich kann das Klebeband ein Abdeckmaterial aufweisen, mit dem bis zum Gebrauch die eine oder die zwei Klebemasseschichten eingedeckt sind. Als Abdeckmaterialien eignen sich auch alle oben ausführlich aufgeführten Materialien. Bevorzugt wird aber ein nicht-fusselndes Material eingesetzt wie eine Kunststofffolie oder ein gut verleimtes, langfaseriges Papier.

Ist eine Schwerentflammbarkeit des beschriebenen Klebebands erwünscht, lässt sich diese erzielen, indem dem Träger und/oder der Klebemasse Flammschutzmittel zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Dann kann das Klebeband eine Geräuschdämpfung nach LV312 oder BMW GS 95008-3 bei einlagiger Messung von mehr als 3 dB (A), insbesondere 5 dB (A) bis 6 dB (A), aufweisen.

Das Klebeband ist vorzugsweise zumindest in Querrichtung von Hand einreißbar.

Vorzugsweise wird das Klebeband zum Ummanteln von langgestrecktem Gut wie insbesondere Kabelsätzen eingesetzt, wobei das langgestreckte Gut in axialer Richtung von dem Klebeband umhüllt wird oder das Klebeband in einer schraubenförmigen Spirale um das langgestreckte Gut geführt wird.

Schließlich ist vom Erfindungsgedanken auch ein langgestrecktes Gut wie insbesondere ein Kabelsatz umfasst, ummantelt mit dem erfindungsgemäßen Klebeband.

Erfindungsgemäß wird ein Schussgarn verwendet, das aus einem Filamentgarn besteht und texturiert ist. Durch die Texturierung entsteht so viel Volumen, dass nur wenige Schuss/cm, beispielsweise 10 Schuss/cm ausreichen, um eine vollständige Flächendeckung zu gewährleisten und ein Durchschlagen der Masse zu verhindern.

Durch die Verwendung endloser Fasern wird die Gefahr verringert, dass Fasern aus der offenen Rückseite beim Klebeband gerissen werden.

Überraschenderweise ist der Träger in der Lage, sehr hohe Zugkräfte in Querrichtung aufzunehmen.

Normalerweise ist der große Nachteil von Gewirken, dass sich die Fäden und Garne gegeneinander verschieben und deshalb das Textil als solches nicht sehr gut fixiert ist.

Durch die Ausrüstung des Gewirkes mit einer Klebemasse, die üblicherweise eine Eindringtiefe zwischen 5 µm und 200 µm aufweist, werden die Längs- und Querfäden überraschenderweise völlig ausreichend fixiert, so dass sich ein funktionierendes Kabelbandagierungband ergibt.

Anhand der nachfolgend beschriebenen Figuren wird das erfindungsgemäße Klebeband in einer besonders vorteilhaften Ausführungsform näher erläutert, ohne hiermit die Erfindung einschränken zu wollen.

### Es zeigen

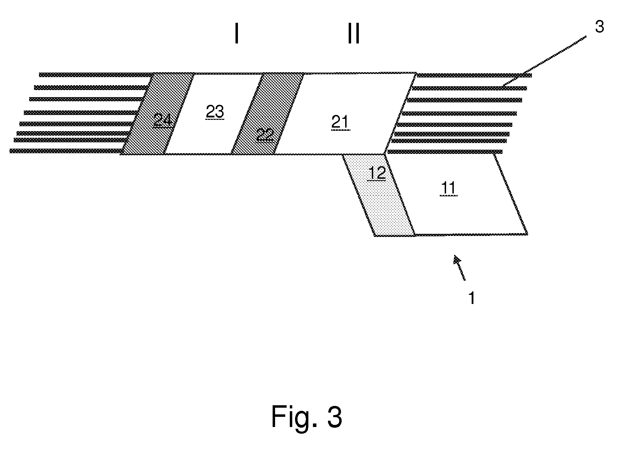

- Figur 3: die Verwendung des erfindungemäßen Klebebands in einer anderen Ausführungsform beim Ummanteln von Kabeln, sprich einen Kabelbaum.

In der Figur 3 ist ein Ausschnitt eines Kabelbaums gezeigt, der sich aus einer Bündelung von einzelnen Kabeln 7 zusammensetzt und der mit dem erfindungsgemäßen Klebeband 1 ummantelt ist. Das Klebeband 1 wird in einer spiralförmigen Bewegung um den Kabelbaum geführt.
Der gezeigte Ausschnitt des Kabelbaums zeigt zwei Wicklungen I und II des Klebebands 1. Nach links hin würden sich würden weitere Wicklungen erstrecken, diese sind hier nicht dargestellt.
Das Trägermaterial 11, 21, 23 ist einseitig mit einer Klebemasse 12, 22, 24 beschichtet, wobei der Auftrag in Form eines Streifens in Längsrichtung erfolgt, der eine geringere Breite aufweist als das Trägermaterial 11, 21, 23 des Klebebands 1.
Die Ummantelung des Kabelbaums erfolgt derartig, dass der Streifen der Klebemasse 12, 22, 24 vollständig auf dem Trägermaterial 11, 21, 23 des Klebebands 1 verklebt. Eine Verklebung mit den Kabeln 7 ist ausgeschlossen.
Das Klebeband 1 umfasst (siehe Wicklung I) in der Breite den Abschnitt 24 und den Anschnitt 22 sowie den dazwischen befindlichen offenen Träger 23. Der Abschnitt 22, der zur Wicklung II gehört, haftet also auf dem Abschnitt 23. (Der Abschnitt 24 würde auf dem Träger der nächsten linksliegenden Wicklung haften.) Die Abschnitte 22, 24 sind im Gegensatz zur offen liegenden Klebemasse 12 von außen nicht sichtbar, weshalb die dichtere Schraffur zur Darstellung gewählt ist.

## Patentansprüche

1. Klebeband, vorzugsweise zum Umhüllen von langgestrecktem Gut wie insbesondere Leitungen oder Kabelsätze, mit einem bandförmigen Träger, der aus einem Schusseintragsgewirke besteht, und mit einer zumindest auf einer Seite des Trägers aufgebrachten vorzugsweise druckempfindlichen Klebebeschichtung, wobei in dem Schusseintragsgewirke das Schussgarn aus einem texturierten Filamentgarn besteht.

2. Klebeband nach Anspruch 1,
**dadurch gekennzeichnet, dass**
das Schusseintragsgewirke ein Flächengewicht zwischen 30 und 200 g/m², vorzugsweise zwischen 60 und 100 g/m², besonders vorzugsweise zwischen 80 und 90 g/m² aufweist.

3. Klebeband nach den Ansprüchen 1 oder 2,
**dadurch gekennzeichnet, dass**
das Schusseintragsgewirke eine Reißkraft in Laufrichtung von 10 daN/(5 cm) bis 20 daN/(5 cm), insbesondere 13 bis 17 daN/(5 cm) sowie eine Reißdehnung in Laufrichtung von 30 bis 50 %, insbesondere 40 % aufweist.

4. Klebeband nach zumindest einem der Ansprüche 1 bis 3,
**dadurch gekennzeichnet, dass**
das Schusseintragsgewirke parallele Maschenreihen aufweist, und zwar bevorzugt 5 bis 12 pro Zentimeter, besonders bevorzugt 10, ganz besonders bevorzugt 7,5.

5. Klebeband nach zumindest einem der vorherigen Ansprüche,
**dadurch gekennzeichnet, dass**
auf dem Schusseintragsgewirke keine weitere Schicht in Form einer Folie oder eines anderen textilen Trägers vorgesehen ist.

6. Klebeband nach zumindest einem der vorherigen Ansprüche,
**dadurch gekennzeichnet, dass**
das gesamte Schusseintragsgewirke aus Polyester oder Polyamid besteht.

7. Klebeband nach zumindest einem der vorherigen Ansprüche,
**dadurch gekennzeichnet, dass**
das Klebeband eine Geräuschdämpfung nach LV312 oder BMW GS 95008-3 bei einlagiger Messung von mehr als 3 dB (A), insbesondere 5 dB (A) bis 6 dB (A), aufweist.

8. Verwendung eines Klebebands nach zumindest einem der vorherigen Ansprüche zum Ummanteln von langgestrecktem Gut, wie insbesondere Kabelsätzen, wobei das langgestreckte Gut in axialer Richtung von dem Klebeband umhüllt wird oder das Klebeband in einer schraubenförmigen Spirale um das langgestreckte Gut geführt wird.

9. Langgestrecktes Gut, wie insbesondere ein Kabelsatz, ummantelt mit einem Klebeband nach zumindest einem der vorherigen Ansprüche.
